# EUROPEAN PATENT SPECIFICATION

(11) **EP 1 241 053 B1**
(45) Date of publication and mention of the grant of the patent: **08.03.2006**
(21) Application number: 01204852.6
(22) Date of filing: 12.12.2001
(51) Int. Cl.: B60R 16/02

(54) **Wiring harness retainer**
Kabelbaumhalter
Elément de retenue pour faisceau de cables

(30) Priority: 16.03.2001 US 276326 P
(43) Date of publication of application: 18.09.2002
(73) Proprietor: S-Y Systems Technologies America LLC, Michigan 48126 (US)
(72) Inventor: Baker, Matthew James, Michigan 48101 (US)
(74) Representative: James, Michael John Gwynne

(56) References cited:
- US-A- 4 771 743
- US-A- 5 661 453
- US-A- 5 694 678
- PATENT ABSTRACTS OF JAPAN vol. 1999, no. 01, 29 January 1999 (1999-01-29) & JP 10 271646 A (NISSAN MOTOR CO LTD), 9 October 1998 (1998-10-09)

## Description

### BACKGROUND OF THE INVENTION

This invention relates to a rotatable support for a wire harness that permits a wire bundle to rotate in relation to a vehicle component.

Wires are used in a vehicle to provide electrical power to various vehicle systems and to allow for the communication of electrical signals between these systems. The wire harness serves to support the numerous wire bundles in a vehicle. Frequently, due to the confined space of a vehicle, such wire harnesses should have the flexibility to wrap around various vehicle components.

Current wire harnesses employ rigid retainers that provide little flexibility for a harness assembler to direct wire around the contours of a vehicle component. These retainers merely lock the wire harness in the particular orientation in which they are inserted. Such retainers may require a manufacturer to design a great variety of retainers to accommodate the various orientations encountered in the harnessing of wire. Moreover, they require the assembler to painstakingly and correctly orient the retainer on the vehicle component.

A need therefore exists for a more convenient and flexible approach to harnessing wire in a vehicle.

U.S. Patent No. 5,694,678 discloses a family of generic of wire-harness retainer clip holders in which retainer clips for holding a wire harness can be mounted. The holders comprise a base and a frame for mounting a retainer clip portion which can permit adjustment in various ways including adjustment of angular orientation.

### SUMMARY OF THE INVENTION

According to one aspect of the invention there is provided a wire harness assembly for a vehicle comprising:
a wire harness;
a rotatable support for retaining said wire harness, allowing rotation of said wire harness about a first axis of rotation and a second axis of rotation wherein said second axis is transverse to said first axis;
a clip operatively connected to said rotatable support wherein said clip connects to a vehicle support along an axis and said rotatable support pivots about said axis, characterized by said rotatable support comprising a first portion fixed to said clip with a first set of teeth and a second portion fixed to said wire harness with a second set of teeth to engage said first set of teeth to allow said second portion to be positioned at various locations relative to said axis.

According to another aspect of the invention there is provided a method of harnessing wire comprising the steps of:
connecting a wire to a rotatable support;
rotating said wire on said rotatable support so as to guide said wire around a vehicle component; characterized by clipping a first portion of said rotatable support having a first set of teeth to a vehicle component; and selectively locking a second portion of said rotatable support having a second set of teeth to said first set of teeth of said first portion, thereby locking said wire relative to said vehicle component.

The present invention provides a flexible support for a wire harness on a vehicle component. The retainer comprises a rotating support that allows rotation of the retained wire harness about an axis of rotation on a vehicle component. In this way, the wire harness and support may be placed on a vehicle component with greater freedom in the orientation of wire harness through the vehicle. Moreover, the rotating support permits an assembler to easily direct the wire harness along a variety of paths both before and after insertion of the retainer on the component.

A disclosed wire harness employs a rotating support that permits rotation of a wire bundle on one or more axes by using a clip to connect the support to a vehicle component. The wire harness may rotate within a plane (i.e., along one axis as well as another axis perpendicular to the first).

The clip may comprise a first leg and a second leg such that the legs embrace, like a paper clip, a flange of the vehicle component. Such a feature permits the clip to be placed on any such surface of the component and avoids the necessity of forming a component feature, such as a hole, to accommodate a particular support. Accordingly, not only does the rotating support permit rotation of a wire harness about the clip but also provides the freedom of placing the clip on any flange of the vehicle component. The clip may have a barb to ensure that the clip remains on the flange after clipping the legs to the flange.

In addition, the rotating support may have a swivel base that permits rotation of the wire bundle along a first axis. The support may also allow rotation of the wire bundle along an axis transverse to the first axis. Accordingly, the clip may provide for two degrees of freedom in the adjustment of the wire bundle.

To selectively lock the position of the support following rotation of the wire bundle, the rotating support may comprise a first portion with a first set of teeth and a second portion with a second set of teeth to engage the first set of teeth. The first portion may have an opening to permit the snap fit of the second portion into the first portion. Thus, the teeth may be engaged selectively to maintain the desired orientation of the bundle.

Hence, a wire harness is mounted on a rotatable support and drawn and directed around the vehicle component. The retainer may be selectively locked in place so as to prevent undesired rotation of the wire harness following installation and during vehicle operation. As a consequence of this invention, an assembler may quickly and easily install a wire harness around a vehicle component without having to design specific supports for orienting the wire harness with respect to the component. The invention further permits greater flexibility directing wire around the vehicle component.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 shows a prior art wire retainer used for a wire harness.
Figure 2 illustrates the invention, including wire, rotatable support, and a clip.
Figure 3 illustrates the invention of Figure 1 prior to the insertion of the clip into the rotatable support.
Figure 4A illustrates the insertion of the clip into the rotatable support
Figure 4B shows the locked position.
Figure 5 shows the adjustment of the clip within the rotatable support following insertion.
Figure 6 shows the swivel base of the rotatable support.

### DETAILED DESCRIPTION OF THE PREFERRED EMBODIMENTS

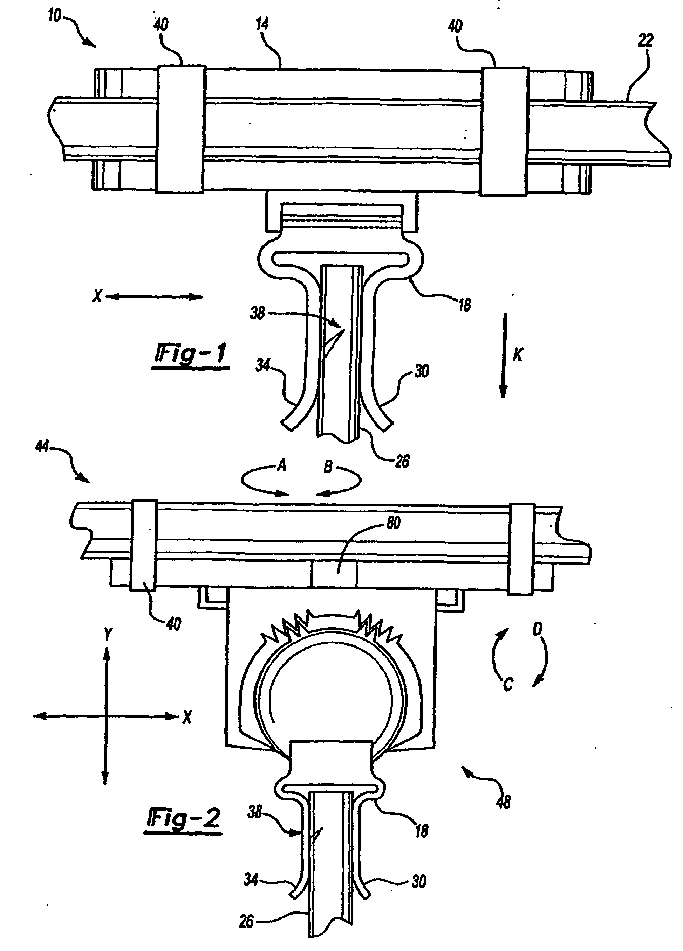

Figure 1 illustrates a prior art wire retainer 10, comprising clip 18, rigid support 14, and wire harness 22, such as a wire bundle. As shown in this figure, clip 18 is fixed to support 14, and straddles flange 26, employing tension between legs 30 and 34 to hold clip 18 on flange 26. Clip 18 is installed on flange 26 by moving in the direction of arrow K. As known, barb 38 digs into flange 26 to lock clip 18 on flange 26 and prevent its removal in a direction opposite arrow K. Tape 40 retains wire harness 22 on rigid support 14. Flange 26 may be a vehicle component, such as a flange on an engine block or a flange in the engine compartment. Because clip 18 will mount to any flange of appropriate thickness, clip 18 offers a wide variety of areas within a vehicle to mount wire harness 22. Typically, the rigid support 14 is molded plastic while clip 18 is metal mounted to the rigid support 14. Notably, from this figure, it is apparent that rigid support 14 does not allow adjustment of the wire harness 22 and only allows it to extend along one axis, such as the x-axis as shown. Thus, a variety of wire retainers are required to direct and support wire harness 22 along different axes.

Figure 2 illustrates an embodiment of the invention. Like prior art wire retainer 10, the invention 44 employs clip 18 having legs 30 and 34 to hold clip 18 on flange 26. In contrast to the inflexible wire retainer 10, however, invention 44 employs rotatable support 48 to provide a wide range of motion for the direction and support of wire harness 22, such as a bundle of wires. Rotatable support 48 may rotate about y-axis in either direction of arrow A or arrow B or may pivot in relation to the x-axis in either direction of arrow C or arrow D. The x-axis is transverse to the y-axis as shown. Thus, rotatable support 48 provides greater flexibility in altering the orientation of wire harness 22 about flange 26 of a vehicle component.

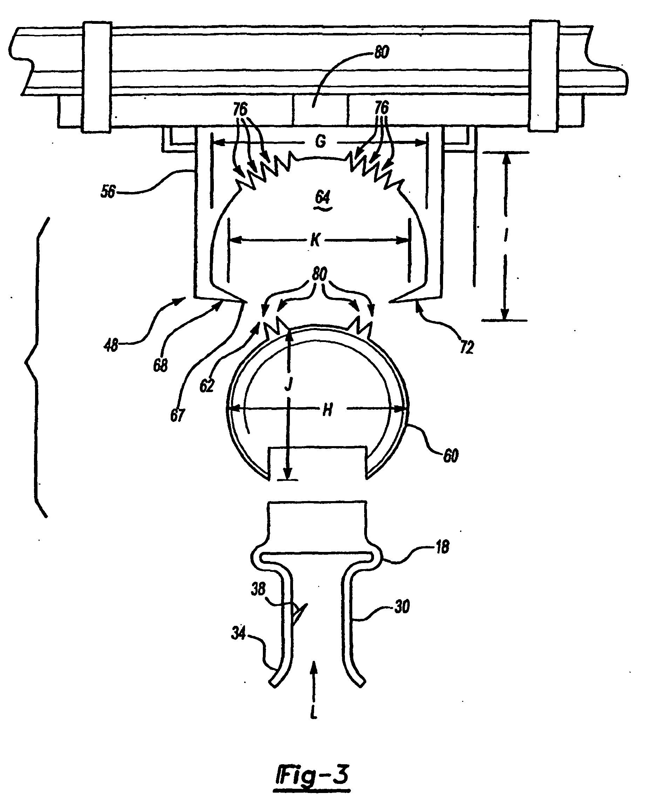

Figure 3 illustrates the pivoting and rotating features of rotatable support 48. As shown, rotatable support comprises first portion 56 and second portion 60. First portion comprises socket 64 while second portion comprises ball 60 that rotates within socket 64. Ball 60 is sized to fit within socket 64 and allow rotation of ball 60. Thus, socket 64 has width G, which may be slightly greater than width of ball 60, which is H. Socket 64 also has a depth I, which may be slightly greater height of ball J.

Socket 64 also has opening 62 of dimension K to receive ball 60. Dimension K is preferably slightly smaller than dimension H. Defining opening 62 is lip 68, which may flex by pivoting outwardly. During assembly, ball 60 contacts lip 68 and generally causes a tip of lip 68 to pivot inwardly and thus increase the size of opening 62 of socket 64 to receive ball 60. Lip 68 may also pivot outwardly from an inner point, also expanding the size of opening 62 of socket 64. Once ball 60 moves completely into socket 64, then lip 68 returns to its unflexed position and serves to retain ball 60 within socket 64. In this way, ball 60 snaps into socket 64. Individuals skilled in the art will appreciate other ways to obtain a ball and socket fit.

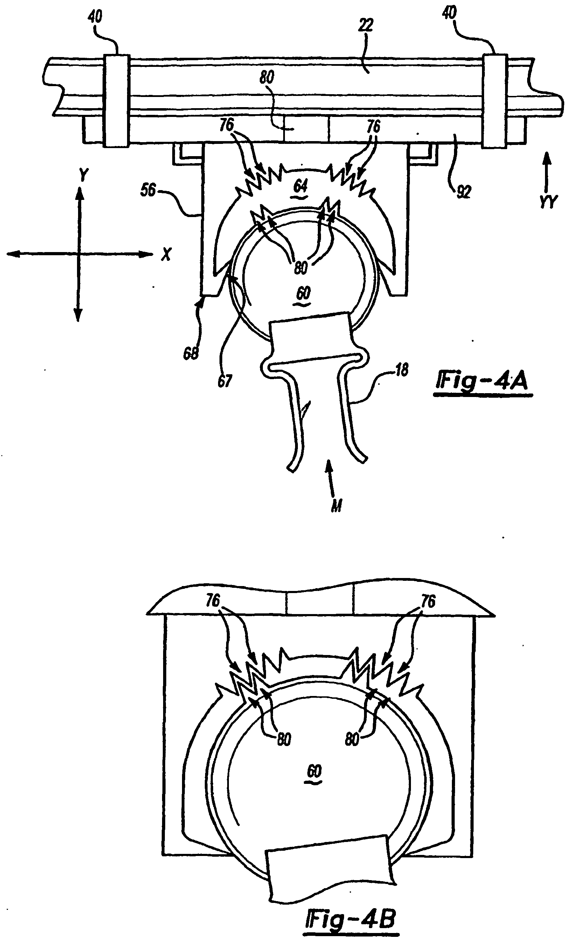

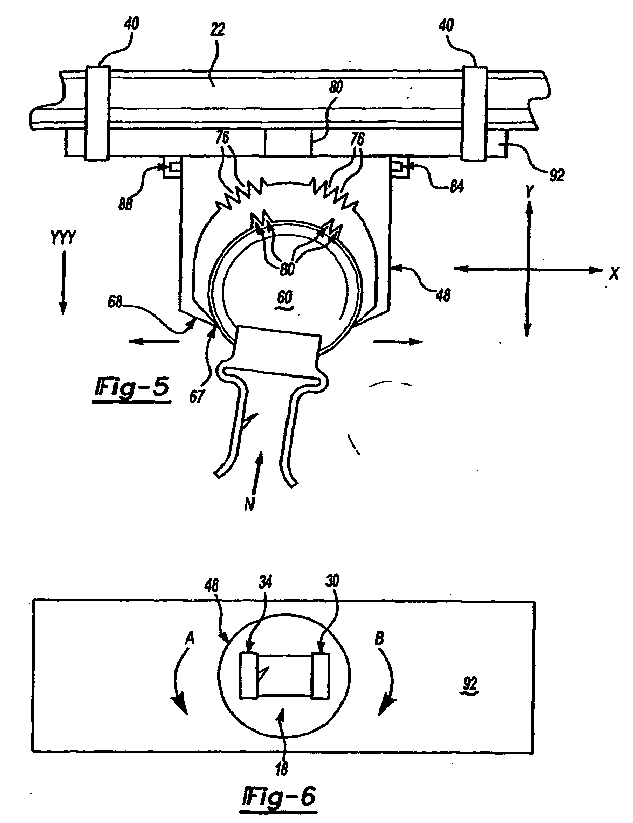

As shown in Figure 3, first portion 56 may also have teeth 76 and second portion ball 60, may have teeth 80. Teeth 76 mate with spaces between teeth 80 to lock the location of ball 60 in socket 64 once ball 60 has been rotated to its desired orientation. This particular design may allow the pivoting of clip 18 to about 45° in relation to the x-axis. One of ordinary skill in the art can modify the design to provide more or less pivoting of clip 18. Figures 4 and 5 show that ball 60 may be inserted into the desired locked orientation or, alternatively, inserted and then adjusted into the desired locked position. The teeth are shown such that there is an unequal number of teeth on the two components. This will facilitate the pivoting of the position of the two components relative to each other, as can be best understood from Figures 4 and 5. As seen in Figure 4A, ball 60 may be inserted along a direction shown by arrow M and causing lip 68 to flex along the direction of arrow YY. Teeth 76 will then mate with spaces between teeth 80 to lock in the desired orientation with respect to the X-axis and Y-axis once lip 68 flexes back to hold the ball as shown in Figure 4B.

Alternatively, as shown in Figure 5, following insertion of ball 60 into socket 64, ball 60 may be moved in direction of arrow YYY, causing tip 67 of lip 68 to flex in the same direction. Teeth 76 will move sufficiently out of spaces between teeth 80 so as to allow relocation of the orientation of ball 60 along a direction as shown by arrow N without causing ball 60 to leave socket 64 entirely. Accordingly, ball 60 may be pivoted within socket 64 and locked into place following insertion. One of ordinary skill in the art can appreciate other structure to accomplish this pivoting action as well.

While the teeth are shown as being fully received within each other in figures as such Figure 1, it should be appreciated that there may be spaces, etc., between the teeth dependent on the particular relative positions. Again, what is generally required is merely some holding structure for holding the two components once the lip 68 flexes to hold the ball within the socket 64.

In addition to the pivoting action described above, as shown in Figure 6, rotatable support 48 may swivel with respect to wire support 92 in direction of arrow A or B. Figure 5 shows post 80 inserted in wire support 92 to permit such swiveling movement. Flanges 84 and 88 of rotatable support 48 and within wire support 92 retain rotatable support 48 with wire support 92. The fit of rotatable support 48 within wire support 92 may be tight enough so as to limit swiveling due to rotational friction between rotatable support 48 and wire support 92. Thus, as described above, rotational movement may be supported along two different axes of rotation, such as the x-axis and the y-axis.

The aforementioned description is exemplary rather than limiting. Many modifications and variations of the present invention are possible in light of the above teaching. The preferred embodiments of this invention have been disclosed. However, one of ordinary skill in the art would recognize that certain modifications would come within the scope of this invention. Hence, within the scope of the appended claims, the invention may be practiced otherwise than as specifically described. For this reason, the following claims should be studied to determine the true scope and content of this invention.

## Claims

1. A wire harness assembly (44) for a vehicle comprising:
a wire harness (22);
a rotatable support (48) for retaining said wire harness (22), allowing rotation of said wire harness (22) about a first axis of rotation and a second axis of rotation wherein said second axis is transverse to said first axis;
a clip (18) operatively connected to said rotatable support (48) wherein said clip (18) connects to a vehicle support along an axis and said rotatable support (48) pivots about said axis, **characterized by** said rotatable support (48) comprising a first portion (60) fixed to said clip (18) with a first set of teeth (80) and a second portion (56) fixed to said wire harness (22) with a second set of teeth (76) to engage said first set of teeth (80) to allow second portion (56) to be positioned at various locations relative to said axis.

2. The wire harness assembly of claim 1 wherein said clip (18) comprises a first leg (30) and a second leg (34).

3. The wire harness assembly of claim 1 wherein said clip (18) has a barb (38) to retain said clip (18) on a vehicle component.

4. The wire harness assembly of claim 1 wherein said rotatable support (48) comprises a swivel base (56).

5. The wire harness assembly of claim 1 wherein said first portion (60) has an opening of a first dimension less then a second dimension of said second portion (56) so as to resiliently receive said second portion (56) into said opening of said first portion (60).

6. A method of harnessing wire comprising the steps of:
connecting a wire to a rotatable support;
rotating said wire on said rotatable support so as to guide said wire around a vehicle component; **characterized by** clipping a first portion of said rotatable support having a first set of teeth to a vehicle component; and selectively locking a second portion of said rotatable support having a second set of teeth to said first set of teeth of said first portion, thereby locking said wire relative to said vehicle component.

## Patentansprüche

1. Kabelbaumanordnung (44) für ein Fahrzeug, folgendes umfassend:
einen Kabelbaum (22);
einen drehbaren Träger (48) zum Halten des Kabelbaums (22), welcher eine Drehung des Kabelbaums (22) um eine erste Drehachse und eine zweite Drehachse erlaubt, wobei die zweite Drehachse transversal zur ersten ist;
einen Halter (18), welcher mit dem drehbaren Träger verbunden ist, wobei der Halter (18) eine Verbindung mit einem Fahrzeugträger entlang einer Achse herstellt und der drehbare Träger (48) um diese Achse verschwenkt,
**dadurch gekennzeichnet,**
**dass** der drehbare Träger (48) einen ersten Abschnitt (60), welcher an dem Halter (18) mit einem ersten Satz von Zähnen (80) befestigt ist, und einen zweiten Abschnitt (56), welcher an dem Kabelbaum (22) mit einem zweiten Satz von Zähnen (76) zum Eingriff in den ersten Satz von Zähnen (80) befestigt ist, aufweist, so dass der zweite Abschnitt (56) relativ zu der Achse in verschiedenen Stellungen positionierbar ist.

2. Kabelbaumanordnung nach Anspruch 1, **dadurch gekennzeichnet, dass** der Halter (18) ein erstes Bein (30) und ein zweites Bein (34) aufweist.

3. Kabelbaumanordnung nach Anspruch 1, **dadurch gekennzeichnet, dass** der Halter (18) zum Halten desselben an einer Fahrzeugkomponente einen Widerhaken (38) aufweist.

4. Kabelbaumanordnung nach Anspruch 1, **dadurch gekennzeichnet, dass** der drehbare Träger (48) einen Drehgelenksockel (56) aufweist.

5. Kabelbaumanordnung nach Anspruch 1, **dadurch gekennzeichnet, dass** der erste Abschnitt (60) eine Öffnung mit einem ersten Maß aufweist, welches kleiner ist als ein zweites Maß des zweiten Abschnitts (56), um den zweiten Abschnitt (56) in der Öffnung des ersten Abschnittes (60) elastisch aufzunehmen.

6. Verfahren zum Verlegen eines Kabels mit folgenden Schritten:
Verbinden eines Kabels mit einem drehbaren Träger,
Drehen des Kabels auf dem Träger, um das Kabel um eine Fahrzeugkomponente herum zu führen;
**gekennzeichnet durch,**
Aufsetzen eines ersten Abschnittes des drehbaren Trägers mit einem ersten Satz von Zähnen auf eine Fahrzeugkomponente und selektiv Arretieren eines zweiten Abschnittes des drehbaren Trägers mit einem zweiten Satz von Zähnen an dem ersten Satz von Zähnen des ersten Abschnitts, wodurch das Kabel relativ zu der Fahrzeugkomponente fixiert wird.

## Revendications

1. Ensemble (44) de harnais pour câbles pour un véhicule, comprenant :
- un harnais pour câbles (22) ;
- un support rotatif (48) pour retenir ledit harnais pour câbles (22), permettant une rotation dudit harnais pour câbles (22) autour d'un premier axe de rotation et d'un second axe de rotation, ledit second axe étant transversal audit premier axe ;
- un dispositif de retenue (18) connecté de façon fonctionnelle audit support rotatif (48), ledit dispositif de retenue (18) se connectant à un support de véhicule le long d'un axe et ledit support rotatif (48) pivotant autour dudit axe,
**caractérisé par le fait que** ledit support rotatif (48) comprend une première partie (60) fixée audit dispositif de retenue (18) par un premier ensemble de dents (80) et une seconde partie (56) fixée audit harnais pour câbles (22) par un second ensemble de dents (76) pour engager ledit premier ensemble de dents (80) afin de permettre à une seconde partie (56) d'être positionnée à divers emplacements par rapport audit axe.

2. Ensemble de harnais pour câbles selon la revendication 1, dans lequel ledit dispositif de retenue (18) comprend une première branche (30) et une seconde branche (34).

3. Ensemble de harnais pour câbles selon la revendication 1, dans lequel ledit dispositif de retenue (18) a un picot (38) pour retenir ledit dispositif de retenue (18) sur un composant du véhicule.

4. Ensemble de harnais pour câbles selon la revendication 1, dans lequel ledit support rotatif (48) comprend une base pivotante (56).

5. Ensemble de harnais pour câbles selon la revendication 1, dans lequel ladite première partie (60) a une ouverture d'une première dimension inférieure à une seconde dimension de ladite seconde partie (56) de façon à recevoir de façon élastique ladite seconde partie (56) dans ladite ouverture de ladite première partie (60).

6. Procédé pour harnacher un câble comprenant les étapes consistant à :
- connecter un câble à un support rotatif ;
- faire tourner ledit câble sur ledit support rotatif de façon à guider ledit câble autour d'un composant de véhicule,
**caractérisé par** les opérations consistant à serrer une première partie dudit support rotatif ayant un premier ensemble de dents sur un composant de véhicule ; et à verrouiller de façon sélective une seconde partie dudit support rotatif ayant un second ensemble de dents sur ledit premier ensemble de dents de ladite première partie, verrouillant de cette façon ledit câble par rapport audit composant de véhicule.
